# EUROPEAN PATENT APPLICATION

(11) **EP 4 567 407 A1**
(43) Date of publication of application: **11.06.2025**
(21) Application number: 24212831.2
(22) Date of filing: 13.11.2024
(51) Int. Cl.: G01N 21/39, G01J 3/42, G01S 17/00, G01N 21/17

(54) **TECHNIQUES FOR CHARACTERIZING GAS MOLECULES IN AN ATMOSPHERE ABOUT AN AIRBORNE VEHICLE**

(30) Priority: 08.12.2023 US 202363607912 P; 13.12.2023 US 202363609777 P; 11.06.2024 US 202418740274
(71) Applicant: Honeywell International Inc., Charlotte, NC 28202 (US)
(72) Inventor: HOYT, Chad, Charlotte, 28202 (US); DOBBINS, Thomas, Charlotte, 28202 (US); CONRY, Patrick, Charlotte, 28202 (US); WIEBOLD, Matthew, Charlotte, 28202 (US)
(74) Representative: Haseltine Lake Kempner LLP

(57) **Abstract**

Techniques are disclosed for determining levels of different types of molecules, e.g., of greenhouse gases, in measurement volumes external to an airborne vehicle or internal to a portion of the airborne vehicle. The techniques use a dual optical frequency comb spectroscopy system.

## Description

### CROSS-REFERENCE TO RELATED APPLICATIONS

The present application claims benefit of U.S. Patent Application Serial Nos. 63/607,912 filed December 8, 2023 and 63/609,777 filed on December 13, 2023; the entire contents of each of the aforementioned patent applications are incorporated herein by reference as if set forth in its entirety.

### BACKGROUND

Greenhouse gases in the atmosphere cause global climate change. There is a need to monitor greenhouse gases in the atmosphere to project such climate change.

### SUMMARY

In some aspects, the techniques described herein relate to a method for determining levels of types of molecules in a volume of atmosphere in or about an airborne vehicle, the method including: emitting from a first area of an internal volume or an external part of the airborne vehicle, two optical frequency combs of which at least one optical frequency comb is transmitted through a measurement volume about an exterior of or in or about an interior portion of the airborne vehicle; receiving, at respectively the first area or a second area of the internal volume or the external part of the airborne vehicle, the two optical frequency combs after at least one of the two optical frequency combs has passed through the measurement volume; using received two optical frequency combs, generating a heterodyne beat frequency comb; determining which spectral components of the heterodyne beat frequency comb have diminished amplitudes and an amount of each such diminished amplitude; using spectral components of the heterodyne beat frequency comb determined to have such diminished amplitudes, determining each type of molecule in the measurement volume; and using an amplitude of each spectral component of the heterodyne beat frequency comb determined to have a diminished amplitude, determining a concentration of one or more types of molecule in the measurement volume.

In some aspects, the techniques described herein relate to an apparatus configured to determine levels of types of molecules in a volume of atmosphere in or about an airborne vehicle, the apparatus including: a first dual optical frequency comb spectroscopy (DOFC) system, wherein the first DOFC system includes a first optical frequency comb generator, a second optical frequency comb generator, a first mixer, and DOFC processing circuitry; wherein each of the first and the second optical frequency comb generator includes a laser; wherein the first optical frequency comb generator is configured to transmit a first optical frequency comb to the first mixer; wherein the second optical frequency comb generator is configured to transmit a second optical frequency comb to the first mixer; wherein at least one of the first and the second optical frequency combs is configured to be transmitted through a first measurement volume before being received by the first mixer; wherein, using received first and second optical frequency combs, the first mixer is configured to generate a first heterodyne beat frequency comb; wherein the DOFC processing circuitry is configured to: receive the first heterodyne beat frequency comb; determine which spectral components of the first heterodyne beat frequency comb have diminished amplitudes and an amount of each such diminished amplitude; using spectral components of the first heterodyne beat frequency comb determined to have such diminished amplitudes, determine each type of molecule in the first measurement volume; and using an amplitude of each spectral component of the first heterodyne beat frequency comb determined to have a diminished amplitude, determine a concentration of at least one type of molecule in the first measurement volume.

In some aspects, the techniques described herein relate to an apparatus configured to determine levels of types of molecules generated in an engine, the apparatus including: a first dual optical frequency comb spectroscopy (DOFC) system, wherein the first DOFC system includes a first optical frequency comb generator, a second optical frequency comb generator, a first mixer, and DOFC processing circuitry; wherein each of the first and the second optical frequency comb generator includes a laser; wherein the first optical frequency comb generator is configured to transmit a first optical frequency comb to the first mixer; wherein the second optical frequency comb generator is configured to transmit a second optical frequency comb to the first mixer; wherein at least one of the first and the second optical frequency combs is configured to be transmitted through a first measurement volume before being received by the first mixer, wherein the first measurement volume is at a first location in the engine; wherein, using received first and second optical frequency combs, the first mixer is configured to generate a first heterodyne beat frequency comb; wherein the DOFC processing circuitry is configured to: receive the first heterodyne beat frequency comb; determine which spectral components of the first heterodyne beat frequency comb have diminished amplitudes and an amount of each such diminished amplitude; using spectral components of the first heterodyne beat frequency comb determined to have such diminished amplitudes, determine each type of molecule in the first measurement volume; and using an amplitude of each spectral component of the first heterodyne beat frequency comb determined to have a diminished amplitude, determine a concentration of at least one type of molecule in the first measurement volume; and a second DOFC system, wherein the second DOFC system includes a third optical frequency comb generator, a fourth optical frequency comb generator, and a second mixer; wherein each of the third and the fourth optical frequency comb generator includes a laser; wherein the third optical frequency comb generator is configured to transmit a third optical frequency comb to the second mixer; wherein the fourth optical frequency comb generator is configured to transmit a fourth optical frequency comb to the second mixer; wherein at least one of the third and the fourth optical frequency combs is configured to be transmitted through a second measurement volume before being received by the second mixer, wherein the second measurement volume is at a second location in the engine; wherein, using received third and fourth optical frequency combs, the second mixer is configured to generate a second heterodyne beat frequency comb; wherein the DOFC processing circuitry is further configured to: receive the second heterodyne beat frequency comb; determine which spectral components of the second heterodyne beat frequency comb have diminished amplitudes and an amount of each such diminished amplitude; using spectral components of the second heterodyne beat frequency comb determined to have such diminished amplitudes, determine each type of molecule in the second measurement volume; using an amplitude of each spectral component of the second heterodyne beat frequency comb determined to have a diminished amplitude, determine a concentration of at least one type of molecule in the second measurement volume; and using determined concentrations of the at least one type of molecule determined to be in the first measurement volume and the second measurement volume, determining a concentration of at least one type of molecule added or removed between the second measurement volume and the first measurement volume.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, in which:
FIG. 1 illustrates exemplary embodiments of mounting configurations for one or more dual optical frequency comb spectroscopy systems on and/or in an airborne vehicle;
FIG. 2 illustrates other embodiments of mounting configurations for one or more dual optical frequency comb spectroscopy systems on an airborne vehicle;
FIG. 3 illustrates yet other embodiments of mounting configurations for one or more dual optical frequency comb spectroscopy systems on an airborne vehicle;
FIG. 4 illustrates yet further exemplary embodiments of mounting configurations for one or more dual optical frequency comb spectroscopy systems on an airborne vehicle;
FIG. 5A illustrates embodiments of mounting configurations for one or more dual optical frequency comb spectroscopy systems in an internal volume of an airborne vehicle;
FIG. 5B illustrates other embodiments of mounting configurations for one or more dual optical frequency comb spectroscopy systems in an internal volume 551 of an airborne vehicle;
FIG. 6 illustrates a block diagram of one embodiment of a dual optical frequency comb spectroscopy system; and
FIG. 7 illustrates a flow diagram of one embodiment of a method for ascertaining gas concentration.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

The embodiments described below include techniques for determining concentrations of different types of molecules, e.g., of greenhouse gases, in a measurement volume either external to an airborne vehicle or internal to a portion of the airborne vehicle. The embodiments described herein also include techniques for determining concentrations of different types of molecules, e.g., of greenhouse gases, in a measurement volume which are generated by an engine of the airborne vehicle. Measurement volume as used herein is a region of environment, e.g., a region of atmosphere, about the exterior of the airborne vehicle. Airborne vehicles are illustrated herein for pedagogical purposes; embodiments of the invention are applicable to other types of vehicles other than airborne vehicles.

In some embodiments of the invention, a pair of optical frequency combs (described elsewhere herein) are emitted from a first region of a surface of an airborne vehicle. At least one of the optical frequency combs propagates through one or more measurement volumes (or regions of environment or atmosphere) about an exterior of the airborne vehicle. Optionally, at least one of the optical frequency combs is reflected from a second region of the surface of the airborne vehicle. The pair of optical frequency combs is received at the first or a third region of the surface of the airborne vehicle.

To do so, one or more dual optical frequency comb spectroscopy (DOFC) systems (or DOFC sensors) are mounted in or on the airborne vehicle. The DOFC system is configured to generate a first optical frequency comb and a second optical frequency comb. Optionally, the first and the second optical frequency combs are phase locked. Each optical frequency comb includes spectral components in an optical spectrum. Each pair of adjacent spectral components, of each optical frequency comb, are separated by a constant frequency. However, such constant frequency separation differs between the first and the second optical frequency combs. The constant frequency separation for the first optical frequency comb is a first separation frequency fₛ. The constant frequency separation for the second optical frequency comb is a second separation frequency fₛ + Δf. Δf may be referred to as an offset frequency. Optionally, the first separation frequency fₛ is at least four orders of magnitude greater than the offset frequency Δf.

A mixer receives the two frequency combs after each has propagated at least once through the measurement volume, and generates a heterodyne beat frequency comb, e.g., in a radio spectrum below the optical spectrum. The measurement volume contains a portion of atmosphere around the airborne vehicle. Such portion of the atmosphere contains one or more different types of molecules including molecules of oxygen and greenhouse gases. DOFC techniques are described in Ian Coddington, Nathan Newbury, and William Swann, "Dual-comb spectroscopy," Optica 3, 414-426 (2016) which is incorporated herein by reference.

Greenhouse gases means types of gases, when in the Earth's atmosphere, trap heat. Types of molecules of greenhouse gases include, without limitation, carbon dioxide, methane, nitrous oxide, hydrofluorocarbons, perfluorocarbons, sulfur hexafluoride, nitrogen trifluoride, water vapor, and ozone.

Each type of molecule, e.g., of greenhouse gases, absorbs electromagnetic energy at one or more frequencies. For example, such absorbed electromagnetic energy is converted into heat by molecules. Thus, when at least one of the optical frequency combs propagates through a measurement volume containing one or more types of molecules, *e.g.,* of greenhouse gases, a power level of one or more spectral components of the at least one optical frequency combs will be diminished due to absorption by the one or more types of molecules in the measurement volume.¹
¹ In some embodiments illustrated herein, a set of first and second optical frequency combs and a reflected portion thereof propagates through a volume of atmosphere. In such case, the additional attenuation of the reflected portion may be accounted for when determining type of molecules

Each spectral component of the heterodyne beat frequency comb is shifted lower in frequency by the first separation frequency fₛ. Because it is in a lower frequency range, the heterodyne frequency comb may be processed by electronic signal processing, *e.g.,* using a processing system or circuitry. Optionally, the electronic signal processing determines how much a power of each spectral component of the heterodyne beat frequency comb has been attenuated due to absorption by one or more types of molecules in the measurement volume, and compares a frequency (of each spectral component of the heterodyne frequency comb where attenuation is detected) plus the first separation frequency fₛ with one or more optical frequencies at which each type of molecule, *e.g.,* of greenhouse gases, absorbs energy. Optionally, such reference information about the one or more optical frequencies at which each type of molecule, *e.g.,* of greenhouse gases, absorbs energy may be stored in a library in the processing system. Upon identifying that attenuation occurs at one or more spectral components whose frequencies correspond to where a type of molecule, *e.g.,* of a greenhouse gas, absorbs electromagnetic energy, a level of absorption at each of the one or more spectral components may be used to ascertain a concentration of the type of molecule in the measurement volume using conventional spectrometry techniques.

Techniques using DOFC system(s) may be used to characterize levels of different types of molecules, *e.g.,* of greenhouse gases, in a measurement volume either external to an airborne vehicle or internal to a portion of the airborne vehicle. Techniques for using DOFC system(s) to characterize levels of different types of molecules, *e.g.,* of greenhouse gases, in a measurement volume external to an airborne vehicle will be first described.

A DOFC system is configured to be mounted in or on the airborne vehicle and emit the first and the second optical frequency combs through a measurement volume of atmosphere by or in the airborne vehicle. Both optical frequency combs are emitted from either a first area of either (a) an internal surface of an internal volume of the airborne vehicle or (b) an external surface of the airborne vehicle. The first and the second optical frequency combs are phase locked to one another.

Optionally, each of the first and the second optical frequency combs are reflected by an optically reflective surface of the airborne vehicle. The optically reflective surface is a second area of either (a) the internal surface of the internal volume of the airborne vehicle or an internal surface of another internal volume of the airborne vehicle or (b) the external surface of the airborne vehicle.

An optically reflective surface may be a metal surface of metal forming a portion of the airborne vehicle; alternatively, the optically reflective surface may be implemented by attaching an optically reflective sticker onto the second area, applying an optically reflective paint to the second area, and/or forming an array of optical reflectors on the second area. Each exterior surface of the airborne vehicle may be an exterior surface of a body, a foil, a control surface, an engine, a measurement equipment, or any other exterior surface of the airborne vehicle.

Optionally, at least one of the first and the second optical frequency combs is transmitted by part of the DOFC system through a measurement volume directly to another part of the DOFC system. Optionally and alternatively, at least one of the first and the second optical frequency combs is transmitted by part of the DOFC system through a measurement volume; the at least one of the first and the second optical frequency combs is then reflected back, *e.g.,* by an optically reflective surface, through the measurement volume to the same part or a different part of the DOFC system. Optionally, when the first and the second optical frequency combs travel through and are reflected back through the measurement volume, and both optical frequency combs travel through the measurement volume twice; this would be accounted form when determining molecular concentration. For the sake of clarity, a portion of the set of the first and the second optical frequency combs incident on an item, *e.g.,* a reflective surface, an engine, or any other item, may be reflected back to the DOFC system (or a part thereof) which emitted the set.

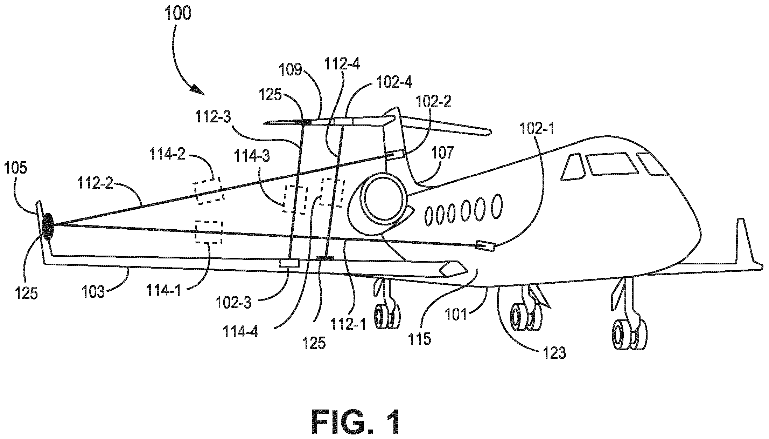

FIG. 1 illustrates exemplary embodiments of mounting configurations 100 for one or more DOFC systems 102-1, 102-2, 102-3, 102-4 on and/or in an airborne vehicle 101. While four different positions of the first, the second, the third, and the fourth DOFC systems 102-1, 102-2, 102-3, 102-4 are illustrated for pedagogical purposes in Figure 1, it should be understood that one or more DOFC systems may be used and may be located elsewhere on and/or in the airborne vehicle 101.

In one embodiment of FIG. 1, a first DOFC system 102-1 is mounted on the body 123 of the airborne vehicle 101, *e.g.,* a fuselage of an aircraft, and configured to direct a first set of a first and a second optical frequency combs along a first line of sight 112-1 toward a portion 105, *e.g.,* a reflective portion, of a first foil 103 of the vehicle, *e.g.,* a winglet on the wing of the aircraft. In another embodiment, the first DOFC system 102-1 is flush mounted with an outer surface 115 of the body 123 of the airborne vehicle 101. Optionally, the portion 105 is covered, at least in part, with an optically reflective material 125 (*e.g.,* a reflective sticker, a reflective paint, and/or an array of reflectors) where the first set of the first and the second optical frequency combs contact the surface of the portion 105, *e.g.,* the winglet. The optically reflective material 125 may cover a portion of the portion 105 or the entire portion 105. The optically reflective material 125 increases the reflectivity at the portion. Optionally, the optically reflective material 125 comprises a reflective material that is reflective with respect to a wavelengths of the spectral components of the first and the second optical frequency combs of the first set. The portion(s) illustrated by other figures herein may be similarly implemented as described above.

The portion 105 is positioned or oriented such that a portion of each of the first and the second optical frequency combs of the first set is reflected back along the first LOS 112-1 to the first DOFC system 102-1 which emitted such optical frequency combs. A first measurement volume 114-1 for the DOFC system 102-1 is positioned between the first DOFC system 102-1 and the portion 105. The first set of the first and the second optical frequency combs is transmitted along the first LOS 112-1 through the first measurement volume 114-1 by the first DOFC system 102-1 and a portion of each of the first and the second optical frequency combs of the first set is reflected by the portion 105 back to the first DOFC system 102-1. Optionally, a location of the first measurement volume 114-1 can be adjusted to sample a volume of atmosphere that is disturbed or undisturbed by the airborne vehicle 101, *e.g.,* by motion of the airborne vehicle 101.

In another embodiment, the second DOFC system 102-2 (which optionally may be considered as part of the first DOFC system 102-1) is mounted on a second foil 107 of the airborne vehicle 101, such as a vertical stabilizer of an aircraft. Optionally, the second DOFC system 102-2 is flush mounted with a surface of the second foil 107. Optionally, the second DOFC system 102-2 is configured to transmit a second set of first and second optical frequency combs along a second LOS 112-2 toward the terminal portion 105 on the fist foil 103 of the airborne vehicle 101. Optionally, if both the first and the second DOFC systems 102-1, 102-2 are used in combination, as shown in FIG. 1, then a portion of the first and the second optical frequency combs of the first set (emitted from the first DOFC system 102-1) is reflected from the airborne vehicle 101, *e.g.,* by the portion 105, along the second LOS 112-2 to the second DOFC system 102-2. A portion of the portion 105 or the entire portion 105 may be covered in an optically reflective material 125 as described elsewhere herein.

A second measurement volume 114-2 characterized by the second DOFC system 102-2 is positioned between the second DOFC system 102-2 and the portion 105. Optionally, an exact location of the second measurement volume 114-2 can be adjusted to sample a volume of atmosphere that is disturbed or undisturbed by the airborne vehicle 101, *e.g.,* by motion of the airborne vehicle 101. Optionally, the reflected portion of each of the first and the second optical frequency combs of the second set propagating along the second LOS 112-2 traverses through the second measurement volume 114-2.

Alternatively, the second DOFC system 102-2 is configured to receive, along the second LOS 112-2, a reflected portion of each of first and second optical frequency combs of the first set emitted by the first DOFC system 102-1 and reflected by the airborne vehicle 101, *e.g.,* the optically reflective material 125. Thus, the first DOFC system 102-1 acts as a transmitter and the second DOFC system 102-2 acts as a receiver. The first and the second DOFC systems 102-1, 102-2 are configured to be used to analyze the first measurement volume 114-1 and/or the second measurement volume 114-2 illustrated in FIG. 1 through which respectively the first set of a first and a second optical frequency combs and/or the reflected portion propagate.

In a further embodiment, a third DOFC system 102-3 is mounted on the first foil 103 of the airborne vehicle 101. Optionally, the third DOFC system 102-3 is flush mounted with a surface of the first foil 103. The third DOFC system 102-3 is configured to transmit a third set of the first and the second optical frequency combs along a third LOS 112-3 towards a third foil 109 attached to the second foil 107, *e.g.,* a horizontal stabilizer attached to the vertical stabilizer of the aircraft. In a further embodiment, at least a portion of a surface of the third foil 109 includes the optically reflective material 125, described elsewhere herein, positioned where the third set of the first and the second optical frequency combs contacts the surface of the third foil 109. A portion of each of the first and the second optical frequency combs of the third set is reflected back along the third LOS 112-3 to the third DOFC system 102-3. A third measurement volume 114-3 for the third DOFC system 102-3 is positioned between the third DOFC system 102-3 and the third foil 109. Optionally, the exact location of the third measurement volume 114-3 can be adjusted to sample a volume of atmosphere that is disturbed or undisturbed by the airborne vehicle 101, *e.g.,* by motion of the airborne vehicle 101.

In yet another embodiment, a fourth DOFC system 102-4 may also be mounted to the third foil 109 and is configured to transmit a fourth set of the first and the second optical frequency combs along a fourth LOS 112-4 toward the first foil 103, e.g., another portion thereof. Optionally, the optically reflective material 125 described elsewhere herein, may be positioned where the fourth set contacts the surface of the first foil 103 or the other portion thereof. A fourth measurement volume 114-4 for the fourth DOFC system 102-4 would be positioned between the fourth DOFC system 102-4 and the horizontal surface of the first foil 103 or the other portion 105 thereof. A portion of each of the first and the second optical frequency combs of the fourth set is reflected back along the fourth LOS 112-4 to the fourth DOFC system 102-. Optionally, an exact location of the fourth measurement volume 114-4 can be adjusted to sample a volume of atmosphere that is disturbed or undisturbed by the motion of the airborne vehicle 101.

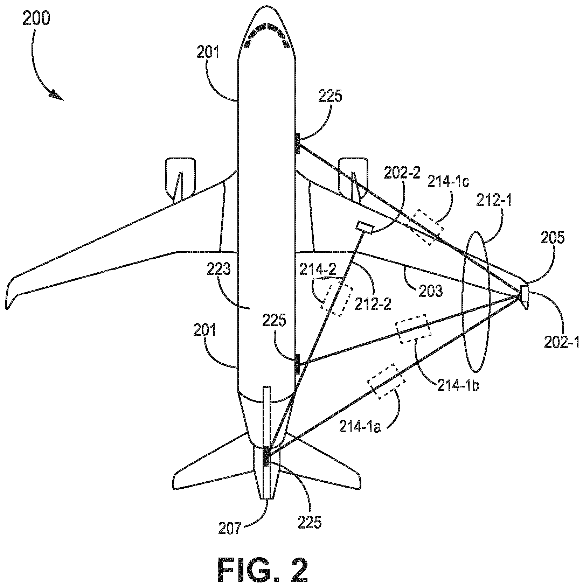

FIG. 2 illustrates other embodiments of mounting configurations 200 for one or more DOFC systems 202-1, 202-2 on an airborne vehicle 201. While the first and the second DOFC systems 202-1, 202-2 are shown in Figure 2 for pedagogical purposes, it should be understood that one or more DOFC systems may be used and may be located elsewhere on or in the airborne vehicle 201.

In the exemplary embodiment of FIG. 2, a first DOFC system 202-1 is mounted on a portion 205 of a first foil 203 of the airborne vehicle 201 and the first DOFC system 202-1 is configured to transmit, along two different, *e.g.,* two or more LOSs 212-1, two or more of sets of first and the second optical frequency combs, wherein each set is transmitted towards different surfaces on the airborne vehicle 101, *e.g.,* on the body 223 and on a second foil 207, *e.g.,* the vertical stabilizer of the aircraft. A portion of each of the first and the second optical frequency combs of each set incident at each different location, is reflected back along the same LOS upon which the set which gave rise to the reflection had propagated. Optionally, the first DOFC system 202-1 is flush mounted with a surface of the portion 205 of the first foil 203. In another embodiment, at least portions of surfaces of the body 223 and the second foil 207 include the optically reflective material 225, as described above with respect to FIG. 1, positioned where each of the two or more sets of the first and the second optical frequency combs contact the surfaces of the body 223 and the second foil 207, and are configured to reflect a portion of a set of the first and the second optical frequency combs incident upon each back to the DOFC system which emitted the incident set of the first and the second optical frequency combs. First, second and third measurement regions 214-1a, 214-1b, 214-1c for the first DOFC system 202-1 are positioned between the first DOFC system 202-1 and each of the surfaces of the body 223 and the second foil 207 upon which a set of the first and the second optical frequency combs impinges. Optionally, the exact location of the first, the second, and the third measurement regions 214-1a, 214-1b, 214-1c can be adjusted to sample a volume of atmosphere that is undisturbed or undisturbed by the airborne vehicle 201, *e.g.,* the motion of the airborne vehicle 201.

The second DOFC system 202-2 is mounted to first foil 203 of the airborne vehicle 201. Optionally, the second DOFC system 202-2 is flush mounted with a surface of the first foil 203 of the airborne vehicle 201. The second DOFC system 202-2 is configured to transmit a second set of a first optical frequency comb and a second optical frequency comb along another LOS 212-2 toward the second foil 207 of the airborne vehicle 201. In another embodiment, the surface of the second foil 207 includes the optically reflective material 225 as described elsewhere herein, positioned where the second set of a first optical frequency comb and a second optical frequency comb contact the surface of the second foil 207. A fourth measurement volume 214-2 for the other DOFC system 202-2 is positioned between the second DOFC system 202-2 and the second foil 207. Optionally, an exact location of the fourth measurement volume 214-2 can be adjusted to sample atmosphere that is undisturbed or disturbed by the airborne vehicle 201, *e.g.,* by movement of the airborne vehicle 201.

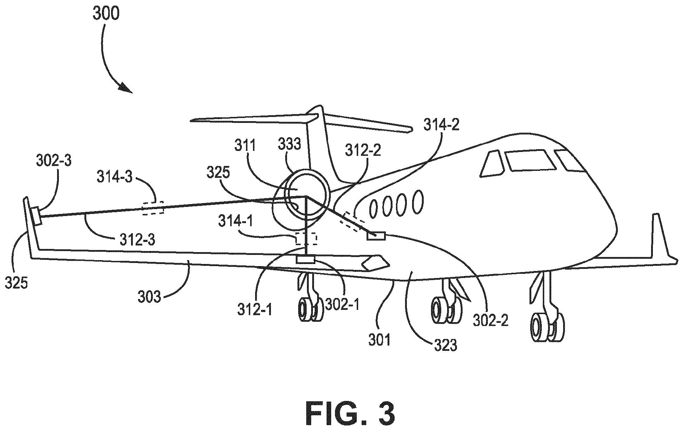

FIG. 3 illustrates yet other embodiments of mounting configurations 300 for one or more DOFC systems 302-1, 302-2, 302-3 on an airborne vehicle 301. For pedagogical purposes, FIG. 3 illustrates a mounting configuration 300 that directs one or more sets of a first optical frequency comb and a second optical frequency comb toward an engine inlet 311 of an engine 333, *e.g.,* a jet engine, of an airborne vehicle 301. A portion of each of the first and the second optical signals of each set set is configured to be reflected, along a unique LOS 312-1, 312-2, 312-3, from a portion of the engine 333, *e.g.,* turbine blades or an interior or exterior surface of the engine nacelle. While three DOFC systems 302-1, 302-2, 302-3 are shown in FIG. 3 for pedagogical purposes, it should be understood that one or more DOFC systems may be used and may be located elsewhere on or in the airborne vehicle 301.

In the exemplary embodiment of FIG. 3, a first DOFC system 302-1 is mounted on a first foil 303 of the airborne vehicle 301 and the first DOFC system 302-1 is configured to transmit a first set of a first optical frequency comb and a second optical frequency comb along a first LOS 312-1 toward the engine inlet 311 of the engine 333. Optionally, the first DOFC system 302-1 is flush mounted with a surface of the first foil 303 of the airborne vehicle 301. Optionally, the first set of the first optical frequency comb and the second optical frequency comb is transmitted along the first LOS 312-1 to contact a surface of the engine inlet 311. In such embodiments, the surface, *e.g.,* an interior surface, of the engine inlet 311 can include the optical reflective material, described elsewhere herein, positioned where the first set of the first and the second optical frequency combs 312-1 contact the surface of the engine inlet 311. A first measurement volume 314-1 for the first DOFC system 302-1 is positioned between the first DOFC system 302-1 and the engine inlet 311. Optionally, the exact location of the first measurement volume 314-1 can be adjusted to sample atmosphere that is undisturbed or disturbed by the airborne vehicle 301, *e.g.,* by movement of the airborne vehicle 301.

A second DOFC system 302-2 is mounted to the body 323 of the airborne vehicle 301. In one embodiment, the second DOFC system 302-2 is flush mounted with a surface of the body 323 of the airborne vehicle 301. The second DOFC system 302-2 is configured to transmit a second set of a first optical frequency comb and a second optical frequency comb along a second LOS 312-2 toward the engine inlet 311. Optionally, the second set of the first optical frequency comb and the second optical frequency comb are transmitted to contact a surface within the engine inlet 311. Optionally, the surface of the engine inlet 311 can include the optically reflective material, described elsewhere herein, positioned where the second set of the first optical frequency comb and the second optical frequency comb contact the surface of the engine inlet 311. The second measurement volume 314-2 for the second DOFC system 302-2 is positioned between the second DOFC system 302-2 and the engine inlet 311. Optionally, the exact location of the second measurement volume 314-2 can be adjusted to sample atmosphere that is undisturbed or disturbed by the airborne vehicle 301, *e.g.,* by movement of the airborne vehicle 301

In one embodiment, a third DOFC system 302-3 may also be mounted on a portion 325 of the first foil 303 or on another component of the airborne vehicle 301. The third DOFC system 302-3 is configured to transmit a third set of a first optical frequency comb and a second optical frequency comb along a third LOS 312-3 toward the engine inlet 311. Optionally, the second set of the first optical frequency comb and the second optical frequency comb is transmitted to contact a surface within the engine inlet 311. Optionally, the surface of the engine inlet can include the optical reflective material, as described elsewhere herein, positioned where the third set of the first optical frequency comb and the second optical frequency comb contact the surface of the engine inlet 311. The third measurement volume 314-3 for the third DOFC system 302-3 is positioned between the third DOFC system 302-3 and the engine inlet 311. Optionally, the exact location of the third measurement volume 314-3 can be adjusted to sample atmosphere that is undisturbed or disturbed by the airborne vehicle 301, *e.g.,* by movement of the airborne vehicle 301.

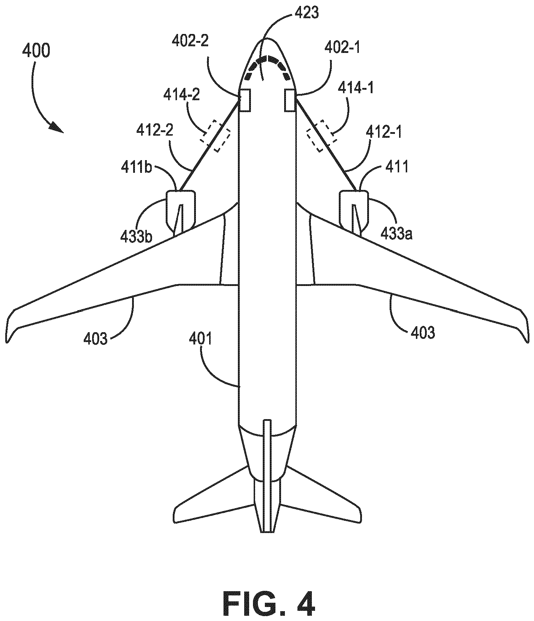

FIG. 4 illustrates yet further exemplary embodiments of mounting configurations for one or more DOFC systems 402-1, 402-2 on an airborne vehicle 401. For pedagogical purposes, FIG. 4 illustrates a mounting configuration 400 where each of two sets of a first optical frequency comb and a second optical frequency comb 412-1, 412-2 are directed along different LOSs 412-1, 412-2 toward and engine inlets 411a, 411b of different engines 433a, 433b, *e.g.,* jet engines, of an airborne vehicle 401. A portion of each of the first and the second optical frequency combs of each set is reflected back to the corresponding DOFC system 402-1, 402-2 along the corresponding LOS 412-1, 412-2. While two DOFC systems 402-1, 402-2 are shown in Figure 4 for pedagogical purposes, it should be understood that one or more DOFC systems may be used and may be located elsewhere on or in the airborne vehicle 401.

For an airborne vehicle 401 having engine inlets 411a, 411b positioned below the first foils 403a, 403b, each DOFC system 402-1, 402-1 may be mounted to the body 423 of the airborne vehicle 401. Each DOFC system 402-1, 402-2 is configured to transmit a set of a first optical frequency comb and a second optical frequency comb along a corresponding LOS 412-1, 412-2 toward an engine inlet 411a, 411b of an engine 433a, 433b of the airborne vehicle 401. Optionally, each set of the first optical frequency comb and the second optical frequency comb 412-1, 412-2 is transmitted to contact a surface within the engine inlet 411a, 411b. Optionally, the surface of the engine inlet 411a, 411b can include the optical reflective material, as described elsewhere herein, positioned where a set of the first optical frequency comb and the second optical frequency comb 412-1, 412-2 contact the surface of the engine inlet 411a, 411b. The measurement volume 414-1, 414-2 for each DOFC system 402-1, 402-2 is positioned between the DOFC system 402-1, 402-2 and the engine inlet 411a, 411b. Optionally, the exact location of each measurement volume 414-1, 414-2 can be adjusted to sample atmosphere that is undisturbed or disturbed by the airborne vehicle 401, *e.g.,* by movement of the airborne vehicle 401.

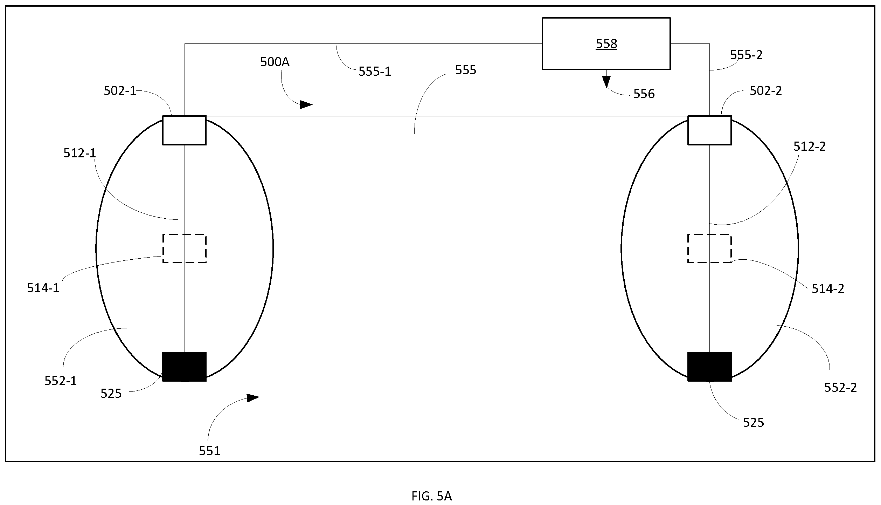

Techniques for using DOFC system(s) to characterize levels of different types of molecules, *e.g.,* of greenhouse gases, in a measurement volume internal to an airborne vehicle, *e.g.,* a portion thereof, will be now described. FIG. 5A illustrates embodiments of mounting configurations for one or more DOFC systems 502-1, 502-2 in an internal volume 551 of an airborne vehicle 101. The internal volume 551 may be in any part of the airborne vehicle and permits atmosphere to flow through the internal volume 551. Optionally, the internal volume 551 may be in or through a body of the airborne vehicle, in a measurement system in or on the airborne vehicle, or in an engine nacelle in or on the airborne vehicle. Although only one DOFC 502-1, 502-2 may be used in the internal volume 551, for pedagogical purpose the use of two DOFC systems is described.

For pedagogical purposes, FIG. 5A illustrates a mounting configuration 500A of two DOFC systems 502-1, 502-2 in an engine nacelle of an engine, *e.g.,* a jet engine, of the airborne vehicle 101. A first DOFC system 502-1 is mounted at or about a first region (or area) of an inlet 552-1, *e.g.,* of an engine nacelle. The first DOFC system 502-1 transmits, along a first LOS 512-1, a first set of a first optical frequency comb and a second optical frequency comb towards an optically reflective surface of a second region (or area) of the engine nacelle, *e.g.,* at or about the inlet 552-1, *e.g.,* of the engine nacelle. A portion of each of the first and the second optical frequency combs of the first set are reflected back along the first LOS 512-1 to the first DOFC system 502-1.

A second DOFC system 502-2 is mounted at or about a third region (or area) of an outlet 552-2, *e.g.,* of an engine nacelle. The second DOFC system 502-2 transmits, along a second LOS 512-2, a second set of a first optical frequency comb and a second optical frequency comb towards an optically reflective surface of a fourth region (or area) of the engine nacelle, *e.g.,* at or about the outlet 552-2, *e.g.,* of the engine nacelle. A portion of each of the first and the second optical frequency combs of the second set are reflected back along the second LOS 512-2 to the second DOFC system 502-2.

Optionally, each of the second and the fourth regions includes the optical reflective material 525, as described elsewhere herein, positioned where a set of the first optical frequency comb and the second optical frequency comb is incident on each of such regions. A measurement volume 514-1, 514-2 for each DOFC system 502-1, 502-2 is positioned along each LOS 512-1, 512-2. Optionally, the exact location of each measurement volume 514-1, 514-2 can be adjusted to sample atmosphere that is undisturbed or disturbed by the airborne vehicle, *e.g.,* by movement of the airborne vehicle.

Optionally, the first DOFC system 502-1 is configured to measure a concentration of types of molecules, *e.g.,* of greenhouse gases, in a first measurement volume 514-1² and the second DOFC system 502-2 is configured to measure a concentration of types of molecules, *e.g.,* of greenhouse gases, in a second measurement volume 514-2³. Thus, for example, when the first and the second measurement volumes are at or about respectively the inlet and an outlet of a nacelle of an engine, the concentration of a type of molecule generated by the engine 556 can be determined by subtracting the concentration of the type of molecule measured in the second measurement volume from from the concentration of type of molecule measured in the first measurement volume. The type of molecule may be a greenhouse gas, water, or a type of molecule used in fuel consumed by the engine. Optionally, a control system (or circuitry) in, or a pilot of, the airborne vehicle can utilize the concentration of additional greenhouse gases generated by the engine to modify engine operation to reduce greenhouse gases emitted by the engine.
² For example, at or about the inlet 552-1, *e.g.,* of an engine nacelle.
³ For example, at or about the outlet 552-2, *e.g.,* of the engine nacelle. Optionally, each measured concentration is a sum of (i) a corresponding concentration which is ambient and in the atmosphere (or environment) about the airborne vehicle and (ii) corresponding concentration emitted by the engine in the engine nacelle 555 in the second measurement volume 514-2

Optionally, a processing system (or processing circuit) 558 is communicatively coupled to each of the first and the second DOFC 502-1, 502-2.⁴ The processing system 558 is configured to either obtain, from each DOFC, the concentration of types of molecules (*e.g.,* of greenhouse gases) 555-1, for example at an input of an engine, and the concentration of types of molecules of greenhouse gases (*e*.*g*., greenhouse gases) 555-2, for example emitted by the engine in the engine nacelle, or to determine those concentrations based upon data provided by each of the first and the second DOFCs 502-1, 502-2. Further, the processing system 558 is configured to determine, by obtaining a difference of both such concentrations 555-1, 555-2, the concentration of additional greenhouse gases generated by the engine 556.
⁴ Optionally, the various processing systems (or circuitry) may be referred to a single processing system or circuitry

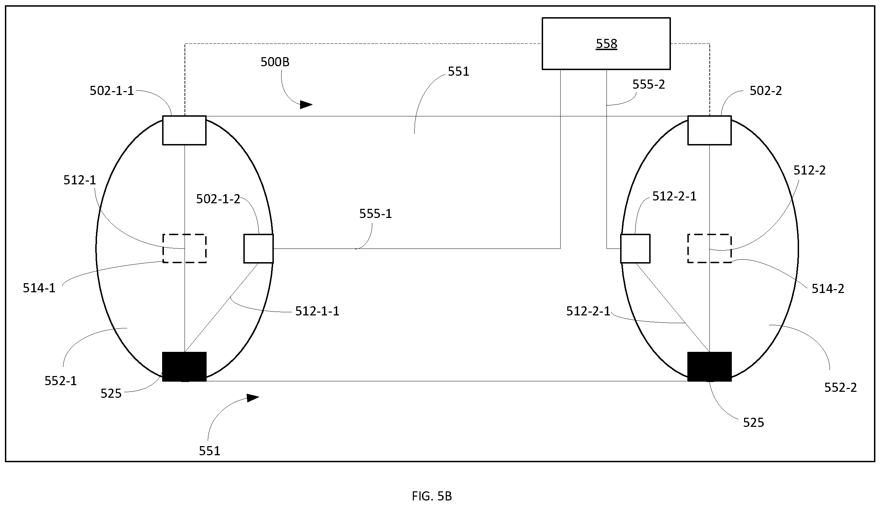

FIG. 5B illustrates other embodiments of a mounting configuration 500B for one or more DOFC systems 502-1, 502-2 in an internal volume 551 of an airborne vehicle 101. FIG. 5B is similar to FIG. 5A except that another DOFC system 502-1-2, 502-2- are used in the engine nacelle, *e.g.,* at or about each of the inlet and the outlet. Although only one pair of DOFCs may be used in the internal volume 551, for pedagogical purpose the use of two pairs of DOFC systems is described.

As discussed elsewhere herein, a portion of each of the first optical frequency comb and the second optical frequency combs of the first set is reflected along a third LOS 512-1-1 to another DOFC (or a component of the first DOFC) 502-1-2. A portion of each of the first optical frequency comb and the second optical frequency combs of the second set is reflected along a fourth LOS 512-2-1 to another DOFC (or a component of the first DOFC) 502-1-2.

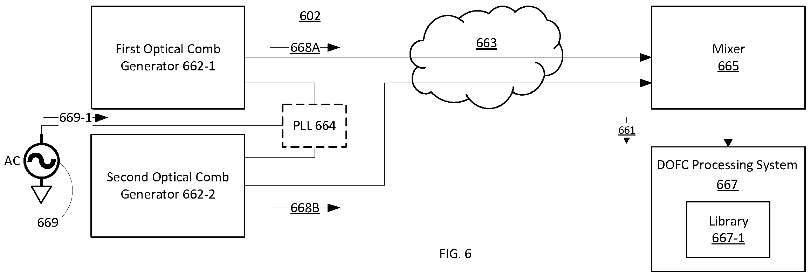

FIG. 6 illustrates a block diagram of one embodiment of a DOFC system 602. The illustrated DOFC system 602 includes a first optical frequency comb generator 662-1, a second optical frequency comb generator 662-2, an optional phase lock loop circuitry (PLL) 664, a frequency mixer (or mixer) 665, an optional frequency reference 669, and a DOFC processing system (or circuitry) 667. The DOFC processing system 667 includes a library of greenhouse gases and corresponding one or more frequencies and/or frequency band(s) in which each type of greenhouse gas would attenuate cause a spectral component in a heterodyne beat frequency comb (discussed elsewhere herein) to be attenuated.

Optionally, each optical frequency comb generator 662-1, 662-2 includes a laser coupled to an optical resonator to generate a first optical frequency comb 668A and a second optical frequency comb 668B. Such first and second optical frequency combs 668A, 668B are described elsewhere herein. Optionally, the constant frequency of each optical frequency comb 668A, 668B is about 100 MHz. Optionally, the offset frequency is about 100 Hz to 1 kHz. Typically, the offset frequency is less than the fixed separation frequency. Optionally, each of a first optical frequency comb 668A and a second optical frequency comb 668B is phase locked to one another to enhance measurement accuracy; this is facilitated.

Optionally, each of the first optical frequency comb 668A and the second optical frequency comb 668B is phase locked to an optional reference signal 669-1 of the optional frequency reference 669 to further enhance measurement accuracy. This is facilitated by the optional frequency reference 669 which is coupled to the by the optional PLL 664 which is coupled to each optical frequency comb generator 662-1, 662-2.

In the illustrated embodiment, both the first optical frequency comb 668A and the second optical frequency comb 668B are transmitted through a measurement volume 663. However, in other, alternative embodiments, the second optical frequency comb 668B is not transmitted through the measurement volume 663. Each optical frequency comb transmitted through the measurement volume 663 containing one or more different types of molecules will be attenuated in one or more frequency ranges in which each type of molecule absorbs electromagnetic spectrum.

Each of the first and the second optical frequency combs 668A, 668B are received by the mixer 665. The mixer 665 is configured to heterodyne mix the two incident optical frequency combs (each in an optical spectrum) and emit a heterodyne beat frequency comb (in the radio spectrum) 661 which is a difference of the two incident optical frequency combs. The heterodyne beat frequency comb includes adjacent frequency components separated by the offset frequency.

The DOFC processing system 667 is configured to receive heterodyne beat frequency comb. The DOFC processing system 667 is configured to determine each type of molecule in measurement volume(s) (through which one or both optical frequency combs passed) and a concentration of each such type of molecule - in a manner described elsewhere herein.

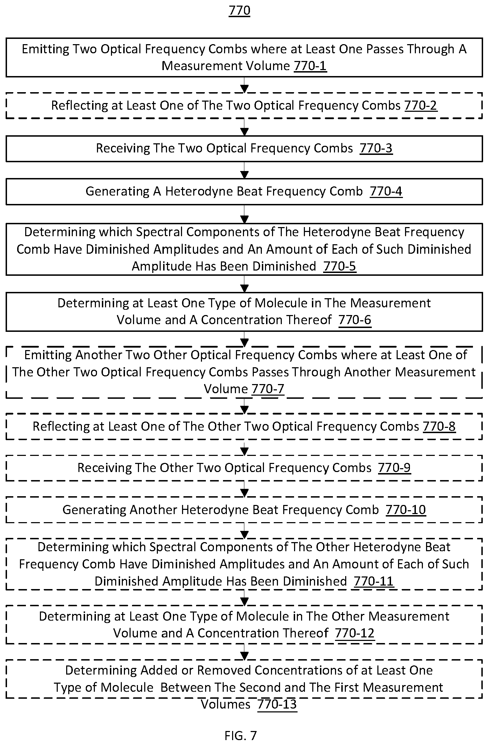

FIG. 7 illustrates a flow diagram of one embodiment of a method 770 to ascertaining gas concentration. To the extent that the methods shown in any Figures are described herein as being implemented with any of the apparatuses illustrated herein, it is to be understood that other embodiments can be implemented in other ways. Optionally, at least part of method 770 may be implemented by processing system(s) described herein, *e.g.,* including the DOFC processing system 667 or by any other type of processing system.

The blocks of the flow diagrams have been arranged in a generally sequential manner for ease of explanation; however, it is to be understood that this arrangement is merely exemplary, and it should be recognized that the processing associated with the methods (and the blocks shown in the Figures) can occur in a different order (for example, where at least some of the processing associated with the blocks is performed in parallel and/or in an event-driven manner).

In block 770-1, two optical frequency combs are emitted, *e.g.,* by a DOFC system, from a first area of an airborne vehicle. At least one of the two optical frequency combs is transmitted through a measurement volume in an environment, *e.g.,* atmosphere, about an exterior of the airborne vehicle, *e.g.,* the body thereof. Optionally, the first area of the airborne vehicle is an external area (*e.g.* of the body or a foil) or an internal area, *e.g.,* of an internal volume of the airborne vehicle. The first optical frequency comb comprises adjacent spectral components separated by a first separation frequency. The second optical frequency comb comprises adjacent spectral components separated by a second separation frequency. The two optical frequency combs are further described elsewhere herein. Optionally, each of the two optical frequency combs are phase locked to one another. Optionally, each of the two optical frequency combs are phase locked to a reference signal.

In optional block 770-2, at least one of the two optical frequency combs is reflected from a portion, *e.g.,* an optically reflective surface, of the airborne vehicle. Optionally, the portion may be a surface of a body of the airborne vehicle, a portion of an engine nacelle, a surface of turbine blade(s) of an engine, *e.g.* a jet engine of the vehicle, a surface of an internal portion of the airborne vehicle, or any other part of the airborne vehicle.

In block 770-3, after passing through the measurement volume, the two optical frequency combs or one or more portions thereof are received at the first area or a second area of the airborne vehicle, *e.g.,* at a body or a foil thereof. In block 770-4, a heterodyne beat frequency comb in a radio spectrum below an optical spectrum is generated by mixing the two optical frequency combs or the one or more portions thereof received at the first or second areas of the airborne vehicle.

In block 770-5, which spectral components of the heterodyne beat frequency comb have a diminished amplitude is determined in comparison to other spectral components of the heterodyne beat frequency comb, *e.g.,* spectral components having a largest amplitude. Further, an amount of each of such diminished amplitude(s) has been diminished is also determined.

In block 770-6, at least one type of molecule, *e.g.,* greenhouse gas, in the measurement volume, and a concentration of each such type, is determined. Each type of molecule, *e.g.,* greenhouse gas, in the measurement volume is determined by comparing the spectral components which have diminished amplitudes with a library of one or more types of molecule type, *e.g.,* greenhouse gas types, and the frequency spectrum diminished by each of the one or more types of molecules, *e.g.,* greenhouse gas types. The concentration of each type of of molecule, *e.g.,* greenhouse gas, determined to be in the measurement volume is found by using an amplitude of one or more of each spectral component whose amplitude has been diminished by a type of green house gas and an amplitude of at least one spectral component whose amplitude has not been diminished, *e.g.,* a ratio thereof.

In optional block 770-7, another two optical frequency combs are emitted, *e.g.,* by a DOFC system, from a third area of an airborne vehicle. At least one of the other two optical frequency combs is transmitted through another measurement volume in an environment, *e.g.,* atmosphere, about an exterior of the airborne vehicle, *e.g.,* the body thereof. Optionally, the third area of the airborne vehicle is an external area (*e.g.* of the body or a foil) or an internal area, *e.g.,* of an internal volume of the airborne vehicle. The first optical frequency comb comprises adjacent spectral components separated by a first separation frequency. The second optical frequency comb comprises adjacent spectral components separated by a second separation frequency. The two optical frequency combs are further described elsewhere herein. Optionally, each of the two optical frequency combs are phase locked to one another. Optionally, each of the two optical frequency combs are phase locked to a reference signal. Optionally, the two optical frequency combs are emitted from one portion, *e.g.,* an inlet, of an internal volume, *e.g.,* an engine nacelle, of the airborne vehicle; optionally, the other two optical frequency combs are emitted from another portion, *e.g.,* an outlet, of the internal volume.

In optional block 770-8, at least a portion of one of the two other optical frequency combs is reflected from another portion, *e.g.,* an optically reflective surface, of the airborne vehicle. Optionally, the other portion may be a surface of a body of the airborne vehicle, a portion of an engine nacelle, a surface of turbine blade(s) of an engine, *e.g.* a jet engine of the vehicle, a surface of an internal portion of the airborne vehicle, or any other part of the airborne vehicle.

In optional block 770-9, the other two optical frequency combs or one or more portions thereof are received after passing through the other measurement volume at the third area or a fourth area of the airborne vehicle, *e.g.,* at a body or a foil thereof. In block 770-10, another heterodyne beat frequency comb in a radio spectrum below an optical spectrum is generated by mixing the two optical frequency combs or the one or the more portions thereof received at the surface or the other surface of the airborne vehicle.

In optional block 770-11, which spectral components of the other heterodyne beat frequency comb have a diminished amplitude is determined in comparison to other spectral components of the heterodyne beat frequency comb, *e.g.,* spectral components having a largest amplitude. Further, an amount of each of such diminished amplitude(s) has been diminished is also determined.

In optional block 770-12, at least one type of molecule, *e.g.,* greenhouse gas, in the other measurement volume, and a concentration of each such type, is determined. In block 770-13, an added or removed concentration of the at least one type of molecule, *e.g.,* greenhouse gas and/or constituent of fuel, between the second and the first measurement volumes is determined. The first measurement volume is the measurement volume and the second measurement volume is the other measurement volume, or vice versa.

Each processing system or circuitry described herein may be implemented by processor circuitry coupled to memory circuitry. The processor circuitry described herein may include one or more microprocessors, microcontrollers, digital signal processing (DSP) elements, application-specific integrated circuits (ASICs), and/or field programmable gate arrays (FPGAs). In this exemplary embodiment, processor circuitry includes or functions with software programs, firmware, or other computer readable instructions for carrying out various process tasks, calculations, and control functions, used in the methods described herein. These instructions are typically tangibly embodied on any storage media (or computer readable medium) used for storage of computer readable instructions or data structures.

The memory circuitry described herein can be implemented with any available storage media (or computer readable medium) that can be accessed by a general purpose or special purpose computer or processor, or any programmable logic device. Suitable computer readable medium may include storage or memory media such as semiconductor, magnetic, and/or optical media. For example, computer readable media may include conventional hard disks, Compact Disk - Read Only Memory (CD-ROM), DVDs, volatile or non-volatile media such as Random Access Memory (RAM) (including, but not limited to, Dynamic Random Access Memory (DRAM)), Read Only Memory (ROM), Electrically Erasable Programmable ROM (EEPROM), and/or flash memory. Combinations of the above are also included within the scope of computer readable media.

Methods of the invention can be implemented in computer readable instructions, such as program modules or applications, which may be stored in the computer readable medium that is part of (optionally the memory circuitry) or communicatively coupled to the processing circuitry, and executed by the processing circuitry, optionally the processor circuitry. Generally, program modules or applications include routines, programs, objects, data components, data structures, algorithms, and the like, which perform particular tasks or implement particular abstract data types.

The term "vertical" refers to a direction perpendicular to the horizontal. Terms such as "on," "side" (as in "sidewall"), "higher," "lower," "over," "top," and "under" are defined with respect to the conventional plane or working surface being on the top surface, regardless of orientation.

### Example Embodiments

Example 1 includes a method for determining levels of types of molecules in a volume of atmosphere in or about an airborne vehicle, the method comprising: emitting from a first area of an internal volume or an external part of the airborne vehicle, two optical frequency combs of which at least one optical frequency comb is transmitted through a measurement volume about an exterior of or in or about an interior portion of the airborne vehicle; receiving, at respectively the first area or a second area of the internal volume or the external part of the airborne vehicle, the two optical frequency combs after at least one of the two optical frequency combs has passed through the measurement volume; using received two optical frequency combs, generating a heterodyne beat frequency comb; determining which spectral components of the heterodyne beat frequency comb have diminished amplitudes and an amount of each such diminished amplitude; using spectral components of the heterodyne beat frequency comb determined to have such diminished amplitudes, determining each type of molecule in the measurement volume; and using an amplitude of each spectral component of the heterodyne beat frequency comb determined to have a diminished amplitude, determining a concentration of one or more types of molecule in the measurement volume.

Example 2 includes the method of Example 1, wherein either one of the two optical frequency combs is phase locked to another optical frequency comb of the two optical frequency combs or each of the two optical frequency combs is phase locked to a reference signal.

Example 3 includes the method of any of Examples 1-2, wherein one determined type of molecule comprises water, one type of greenhouse gas, or one type of molecule in fuel used by an engine of the airborne vehicle.

Example 4 includes the method of any of Examples 1-3, further comprising reflecting, from a portion of the airborne vehicle, portions of each of the two optical frequency combs; wherein receiving the two optical frequency combs comprises receiving each reflected portion; wherein generating the heterodyne beat frequency comb comprises using each reflected portion, generating the heterodyne beat frequency comb.

Example 5 includes the method of any of Examples 1-4, further comprising: emitting from a third area of the internal volume or the external part of the airborne vehicle, two other optical frequency combs of which at least one optical frequency comb is transmitted through another measurement volume about the exterior of or the interior portion of the airborne vehicle; receiving, at respectively the third area or a fourth area of the internal volume or the external part of the airborne vehicle, the two other optical frequency combs after at least one of the two other optical frequency combs has passed through the measurement volume; using received two other optical frequency combs, generating another heterodyne beat frequency comb; determining which spectral components of the other heterodyne beat frequency comb have diminished amplitudes and an amount of each such diminished amplitude; using spectral components of the other heterodyne beat frequency comb determined to have diminished amplitudes, determining each type of molecule in the other measurement volume; using an amplitude of each spectral component of the other heterodyne beat frequency comb determined to have a diminished amplitude, determining a concentration of one or more types of molecule in the other measurement volume; and using determined concentrations of the one or more types of molecule determined to be in the measurement volume and the other measurement volume, determining a concentration of at least one type of molecule added or removed between the measurement volume and the other measurement volume.

Example 6 includes the method of Example 5, wherein the measurement volume is at or about an inlet of an engine nacelle; wherein the other measurement volume is at or about an outlet of the engine nacelle.

Example 7 includes the method of any of Examples 5-6, further comprising reflecting, from another portion of the airborne vehicle, portions of each of the two optical frequency combs; wherein receiving the two other optical frequency combs comprises receiving each reflected portion; wherein generating the other heterodyne beat frequency comb comprises using each reflected portion, generating the other heterodyne beat frequency comb.

Example 8 includes the method of any of Examples 5-7, wherein either one of the other two optical frequency combs is phase locked to another optical frequency comb of the other two optical frequency combs or each of the other two optical frequency combs is phase locked to a reference signal.

Example 9 includes an apparatus configured to determine levels of types of molecules in a volume of atmosphere in or about an airborne vehicle, the apparatus comprising: a first dual optical frequency comb spectroscopy (DOFC) system, wherein the first DOFC system includes a first optical frequency comb generator, a second optical frequency comb generator, a first mixer, and DOFC processing circuitry; wherein each of the first and the second optical frequency comb generator includes a laser; wherein the first optical frequency comb generator is configured to transmit a first optical frequency comb to the first mixer; wherein the second optical frequency comb generator is configured to transmit a second optical frequency comb to the first mixer; wherein at least one of the first and the second optical frequency combs is configured to be transmitted through a first measurement volume before being received by the first mixer; wherein, using received first and second optical frequency combs, the first mixer is configured to generate a first heterodyne beat frequency comb; wherein the DOFC processing circuitry is configured to: receive the first heterodyne beat frequency comb; determine which spectral components of the first heterodyne beat frequency comb have diminished amplitudes and an amount of each such diminished amplitude; using spectral components of the first heterodyne beat frequency comb determined to have such diminished amplitudes, determine each type of molecule in the first measurement volume; and using an amplitude of each spectral component of the first heterodyne beat frequency comb determined to have a diminished amplitude, determine a concentration of at least one type of molecule in the first measurement volume.

Example 10 includes the apparatus of Example 9, wherein either the first optical frequency comb is phase locked to the second optical frequency comb or each of the first and the second optical frequency combs is phase locked to a reference signal.

Example 11 includes the apparatus of any of Examples 9-10, wherein one determined type of molecule comprises water, one type of greenhouse gas, or one type of molecule in fuel used by an engine of the airborne vehicle.

Example 12 includes the apparatus of any of Examples 9-11, further comprising: a second DOFC system, wherein the second DOFC system includes a third optical frequency comb generator, a fourth optical frequency comb generator, and a second mixer; and wherein each of the third and the fourth optical frequency comb generator includes a laser; wherein the third optical frequency comb generator is configured to transmit a third optical frequency comb to the second mixer; wherein the fourth optical frequency comb generator is configured to transmit a fourth optical frequency comb to the second mixer; wherein at least one of the third and the fourth optical frequency combs is configured to be transmitted through a second measurement volume before being received by the second mixer; wherein, using received third and fourth optical frequency combs, the second mixer is configured to generate a second heterodyne beat frequency comb; wherein the DOFC processing circuitry is further configured to: receive the second heterodyne beat frequency comb; determine which spectral components of the second heterodyne beat frequency comb have diminished amplitudes and an amount of each such diminished amplitude; using spectral components of the second heterodyne beat frequency comb determined to have such diminished amplitudes, determine each type of molecule in the second measurement volume; using an amplitude of each spectral component of the second heterodyne beat frequency comb determined to have a diminished amplitude, determine a concentration of at least one type of molecule in the second measurement volume; and using determined concentrations of at least type of molecule determined to be in the first measurement volume and the second measurement volume, determining a concentration of at least one type of molecule added or removed between the second measurement volume and the first measurement volume.

Example 13 includes the apparatus of Example 12, wherein the first measurement volume is at or about an inlet of an engine nacelle; wherein the second measurement volume is at or about an outlet of the engine nacelle.

Example 14 includes the apparatus of any of Examples 12-13, wherein either the third optical frequency comb is phase locked to the fourth optical frequency comb or each of the third and the fourth optical frequency combs is phase locked to a reference signal.

Example 15 includes an apparatus configured to determine levels of types of molecules generated in an engine, the apparatus comprising: a first dual optical frequency comb spectroscopy (DOFC) system, wherein the first DOFC system includes a first optical frequency comb generator, a second optical frequency comb generator, a first mixer, and DOFC processing circuitry; wherein each of the first and the second optical frequency comb generator includes a laser; wherein the first optical frequency comb generator is configured to transmit a first optical frequency comb to the first mixer; wherein the second optical frequency comb generator is configured to transmit a second optical frequency comb to the first mixer; wherein at least one of the first and the second optical frequency combs is configured to be transmitted through a first measurement volume before being received by the first mixer, wherein the first measurement volume is at a first location in the engine; wherein, using received first and second optical frequency combs, the first mixer is configured to generate a first heterodyne beat frequency comb; wherein the DOFC processing circuitry is configured to: receive the first heterodyne beat frequency comb; determine which spectral components of the first heterodyne beat frequency comb have diminished amplitudes and an amount of each such diminished amplitude; using spectral components of the first heterodyne beat frequency comb determined to have such diminished amplitudes, determine each type of molecule in the first measurement volume; and using an amplitude of each spectral component of the first heterodyne beat frequency comb determined to have a diminished amplitude, determine a concentration of at least one type of molecule in the first measurement volume; and a second DOFC system, wherein the second DOFC system includes a third optical frequency comb generator, a fourth optical frequency comb generator, and a second mixer; wherein each of the third and the fourth optical frequency comb generator includes a laser; wherein the third optical frequency comb generator is configured to transmit a third optical frequency comb to the second mixer; wherein the fourth optical frequency comb generator is configured to transmit a fourth optical frequency comb to the second mixer; wherein at least one of the third and the fourth optical frequency combs is configured to be transmitted through a second measurement volume before being received by the second mixer, wherein the second measurement volume is at a second location in the engine; wherein, using received third and fourth optical frequency combs, the second mixer is configured to generate a second heterodyne beat frequency comb; wherein the DOFC processing circuitry is further configured to: receive the second heterodyne beat frequency comb; determine which spectral components of the second heterodyne beat frequency comb have diminished amplitudes and an amount of each such diminished amplitude; using spectral components of the second heterodyne beat frequency comb determined to have such diminished amplitudes, determine each type of molecule in the second measurement volume; using an amplitude of each spectral component of the second heterodyne beat frequency comb determined to have a diminished amplitude, determine a concentration of at least one type of molecule in the second measurement volume; and using determined concentrations of the at least one type of molecule determined to be in the first measurement volume and the second measurement volume, determining a concentration of at least one type of molecule added or removed between the second measurement volume and the first measurement volume.

Example 16 includes the apparatus of Example 15, wherein the first measurement volume is at or about an inlet of a nacelle of the engine; wherein the second measurement volume is at or about an outlet of the nacelle of the engine.

Example 17 includes the apparatus of any of Examples 15-16, wherein either the first optical frequency comb is phase locked to the second optical frequency comb or each of the first and the second optical frequency combs is phase locked to a reference signal; wherein either the third optical frequency comb is phase locked to the fourth optical frequency comb or each of the third and the fourth optical frequency combs is phase locked to another reference signal.

Example 18 includes the apparatus of any of Examples 15-17, wherein determining the concentration of the at least one type of molecule added or removed between the second measurement volume and the first measurement volume comprises determining a concentration of at least one type of greenhouse gas generated by the engine.

Example 19 includes the apparatus of any of Examples 15-18, wherein determining the concentration of the at least one type of molecule added or removed between the second measurement volume and the first measurement volume comprises determining a concentration of at least one type of molecule in fuel used by the engine.

Example 20 includes the apparatus of any of Examples 15-19, wherein the engine is an engine of an airborne vehicle.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A method for determining levels of types of molecules in a volume of atmosphere in or about an airborne vehicle, the method comprising:
emitting from a first area of an internal volume or an external part of the airborne vehicle, two optical frequency combs of which at least one optical frequency comb is transmitted through a measurement volume about an exterior of or in or about an interior portion of the airborne vehicle;
receiving, at respectively the first area or a second area of the internal volume or the external part of the airborne vehicle, the two optical frequency combs after at least one of the two optical frequency combs has passed through the measurement volume;
using received two optical frequency combs, generating a heterodyne beat frequency comb;
determining which spectral components of the heterodyne beat frequency comb have diminished amplitudes and an amount of each such diminished amplitude; using spectral components of the heterodyne beat frequency comb determined to have such diminished amplitudes, determining each type of molecule in the measurement volume; and
using an amplitude of each spectral component of the heterodyne beat frequency comb determined to have a diminished amplitude, determining a concentration of one or more types of molecule in the measurement volume.

2. The method of claim 1, wherein either one of the two optical frequency combs is phase locked to another optical frequency comb of the two optical frequency combs or each of the two optical frequency combs is phase locked to a reference signal.

3. The method of claim 1, wherein one determined type of molecule comprises water, one type of greenhouse gas, or one type of molecule in fuel used by an engine of the airborne vehicle.

4. The method of claim 1, further comprising reflecting, from a portion of the airborne vehicle, portions of each of the two optical frequency combs;
wherein receiving the two optical frequency combs comprises receiving each reflected portion;
wherein generating the heterodyne beat frequency comb comprises using each reflected portion, generating the heterodyne beat frequency comb.

5. The method of claim 1, further comprising:
emitting from a third area of the internal volume or the external part of the airborne vehicle, two other optical frequency combs of which at least one optical frequency comb is transmitted through another measurement volume about the exterior of or the interior portion of the airborne vehicle;
receiving, at respectively the third area or a fourth area of the internal volume or the external part of the airborne vehicle, the two other optical frequency combs after at least one of the two other optical frequency combs has passed through the measurement volume;
using received two other optical frequency combs, generating another heterodyne beat frequency comb;
determining which spectral components of the other heterodyne beat frequency comb have diminished amplitudes and an amount of each such diminished amplitude;
using spectral components of the other heterodyne beat frequency comb determined to have diminished amplitudes, determining each type of molecule in the other measurement volume;
using an amplitude of each spectral component of the other heterodyne beat frequency comb determined to have a diminished amplitude, determining a concentration of one or more types of molecule in the other measurement volume;
using determined concentrations of the one or more types of molecule determined to be in the measurement volume and the other measurement volume, determining a concentration of at least one type of molecule added or removed between the measurement volume and the other measurement volume; and
optionally, wherein the measurement volume is at or about an inlet of an engine nacelle and wherein the other measurement volume is at or about an outlet of the engine nacelle.

6. An apparatus configured to determine levels of types of molecules in a volume of atmosphere in or about an airborne vehicle, the apparatus comprising:
a first dual optical frequency comb spectroscopy (DOFC) system, wherein the first DOFC system includes a first optical frequency comb generator, a second optical frequency comb generator, a first mixer, and DOFC processing circuitry;
wherein each of the first and the second optical frequency comb generator includes a laser;
wherein the first optical frequency comb generator is configured to transmit a first optical frequency comb to the first mixer;
wherein the second optical frequency comb generator is configured to transmit a second optical frequency comb to the first mixer;
wherein at least one of the first and the second optical frequency combs is configured to be transmitted through a first measurement volume before being received by the first mixer;
wherein, using received first and second optical frequency combs, the first mixer is configured to generate a first heterodyne beat frequency comb;
wherein the DOFC processing circuitry is configured to:
receive the first heterodyne beat frequency comb;
determine which spectral components of the first heterodyne beat frequency comb have diminished amplitudes and an amount of each such diminished amplitude;
using spectral components of the first heterodyne beat frequency comb determined to have such diminished amplitudes, determine each type of molecule in the first measurement volume; and
using an amplitude of each spectral component of the first heterodyne beat frequency comb determined to have a diminished amplitude, determine a concentration of at least one type of molecule in the first measurement volume.

7. The apparatus of claim 6, wherein either the first optical frequency comb is phase locked to the second optical frequency comb or each of the first and the second optical frequency combs is phase locked to a reference signal.

8. The apparatus of claim 6, wherein one determined type of molecule comprises water, one type of greenhouse gas, or one type of molecule in fuel used by an engine of the airborne vehicle.

9. The apparatus of claim 6, further comprising:
a second DOFC system, wherein the second DOFC system includes a third optical frequency comb generator, a fourth optical frequency comb generator, and a second mixer; and
wherein each of the third and the fourth optical frequency comb generator includes a laser;
wherein the third optical frequency comb generator is configured to transmit a third optical frequency comb to the second mixer;
wherein the fourth optical frequency comb generator is configured to transmit a fourth optical frequency comb to the second mixer;
wherein at least one of the third and the fourth optical frequency combs is configured to be transmitted through a second measurement volume before being received by the second mixer;
wherein, using received third and fourth optical frequency combs, the second mixer is configured to generate a second heterodyne beat frequency comb;
wherein the DOFC processing circuitry is further configured to:
receive the second heterodyne beat frequency comb;
determine which spectral components of the second heterodyne beat frequency comb have diminished amplitudes and an amount of each such diminished amplitude;
using spectral components of the second heterodyne beat frequency comb determined to have such diminished amplitudes, determine each type of molecule in the second measurement volume;
using an amplitude of each spectral component of the second heterodyne beat frequency comb determined to have a diminished amplitude, determine a concentration of at least one type of molecule in the second measurement volume;
using determined concentrations of at least type of molecule determined to be in the first measurement volume and the second measurement volume, determining a concentration of at least one type of molecule added or removed between the second measurement volume and the first measurement volume; and
optionally, wherein the first measurement volume is at or about an inlet of an engine nacelle and wherein the second measurement volume is at or about an outlet of the engine nacelle.

10. The apparatus of claim 9, wherein either the third optical frequency comb is phase locked to the fourth optical frequency comb or each of the third and the fourth optical frequency combs is phase locked to a reference signal.
